(19) Europäisches Patentamt / European Patent Office / Office européen des brevets

(11) **EP 1 678 902 B1**

(12) **EUROPÄISCHE PATENTSCHRIFT**

(45) Veröffentlichungstag und Bekanntmachung des Hinweises auf die Patenterteilung:
**08.08.2012 Patentblatt 2012/32**

(21) Anmeldenummer: **04786737.9**

(22) Anmeldetag: **10.09.2004**

(51) Int Cl.:
*H04L 27/233* (2006.01)

(86) Internationale Anmeldenummer:
**PCT/DE2004/002015**

(87) Internationale Veröffentlichungsnummer:
**WO 2005/027450 (24.03.2005 Gazette 2005/12)**

(54) **VERFAHREN UND VORRICHTUNG ZUR BERECHNUNG VON NULLDURCHGANGS-REFERENZSEQUENZEN FÜR DIE SIGNALDETEKTION WINKELMODULIERTER SIGNALE AUF DER BASIS VON NULLDURCHGÄNGEN DES EMPFANGSSIGNALS**

METHOD AND DEVICE FOR CALCULATING ZERO CROSSING REFERENCE SEQUENCES FOR SIGNAL DETECTION OF ANGLE-MODULATED SIGNALS BASED ON ZERO CROSSINGS OF THE RECEIVED SIGNAL

PROCEDE ET DISPOSITIF POUR CALCULER DES SEQUENCES DE REFERENCE DE PASSAGES AU POINT ZERO POUR PERMETTRE LA DETECTION DE SIGNAUX A MODULATION ANGULAIRE EN FONCTION DES PASSAGES AU POINT ZERO DU SIGNAL RE U

(84) Benannte Vertragsstaaten:
**DE FR GB**

(30) Priorität: **12.09.2003 DE 10342192**

(43) Veröffentlichungstag der Anmeldung:
**12.07.2006 Patentblatt 2006/28**

(73) Patentinhaber: **Intel Mobile Communications Technology GmbH 85579 Neubiberg (DE)**

(72) Erfinder:
• **NEUBAUER, André 47807 Krefeld (DE)**
• **NIEDERHOLZ, Jürgen 47608 Geldern (DE)**

(74) Vertreter: **Patentanwälte Lambsdorff & Lange Dingolfinger Strasse 6 81673 München (DE)**

(56) Entgegenhaltungen:
**US-A- 5 103 463     US-A- 5 484 987
US-A- 5 784 416**

• **IWANAMI Y: "PERFORMANCE SEQUENCE ESTIMATION SCHEME OF NARROWBAND DIGITAL FM SIGNALS WITH LIMITER-DISCRIMINATOR DETECTION" IEEE JOURNAL ON SELECTED AREAS IN COMMUNICATIONS, IEEE INC. NEW YORK, US, Bd. 13, Nr. 2, 1. Februar 1995 (1995-02-01), Seiten 310-315, XP000489295 ISSN: 0733-8716**

## EP 1 678 902 B1

**Beschreibung**

Die vorliegende Erfindung betrifft ein Verfahren sowie eine Vorrichtung zur Berechnung von Nulldurchgangs-Referenzsequenzen für die Datendetektion einer in einem Empfänger bestimmten Sequenz von Nulldurchgängen eines empfangenen Signals, welchem eine senderseitig winkelmodulierte und zum Empfänger übertragene Datensymbolfolge zugrunde liegt.

Das Verfahren und die Vorrichtung, auf welche sich die Erfindung bezieht, sind vorzugsweise Bestandteile von schnurlosen digitalen Kommunikationssystemen, welchen der Bluetooth-, DECT-, WDCT-Standard oder ein ähnlicher Standard zugrunde liegt.

In derartigen Kommunikationssystemen werden empfängerseitig zur Demodulation des Empfangssignals und zur Signaldetektion klassische Signalverarbeitungsmethoden verwendet. Es sind Empfängerkonzepte bekannt, bei denen das Zwischenfrequenzsignal mit Hilfe eines Analog-Digital-Wandlers in den Digitalbereich umgesetzt wird und die Signaldetektion mit Hilfe von Methoden der digitalen Signalverarbeitung realisiert wird. Mit derartigen Verfahren lässt sich eine qualitativ hochwertige Signaldetektion erzielen, nachteilig ist jedoch, dass ein aufwändiger Analog-Digital-Wandler benötigt wird. Ein anderes oftmals verwendetes Verfahren basiert auf dem sogenannten Limiter-Diskriminator-Demodulator, bei welchem nach einer harten Limitierung des in der Regel komplexen Bandpass-Signals eine Demodulation des empfangenen winkelmodulierten Signals z.B. durch einen analogen Koinzidenz-Demodulator erfolgt.

In der Druckschrift DE 012 14 581.4, welche am Anmeldetag des vorliegenden Schutzrechtes noch nicht veröffentlicht war, wird ein Zwischenfrequenzempfänger beschrieben, welcher zur Signaldetektion einen Nulldurchgangs-Detektor verwendet. Der Nulldurchgangs-Detektor misst die zeitlichen Abstände zwischen den Nulldurchgängen eines empfangenen Zwischenfrequenzsignals und ermittelt aus der Nulldurchgangs-Information die gesendeten Datensymbole. Zu diesem Zweck wird die von dem Nulldurchgangs-Detektor ausgegebene Folge von Nulldurchgangs-Abständen in einer Schieberegisterkette in digitaler Form gespeichert und in einer Klassifizierungseinheit mit vorab gespeicherten Nulldurchgangs-Referenzsequenzen verglichen. Für die Distanzmessung zwischen der gemessenen und den gespeicherten Sequenzen wird eine City-Block-Metrik vorgeschlagen. Diejenige vorab gespeicherte Nulldurchgangs-Referenzsequenz, welche die kleinste Distanz zu der gemessen Nulldurchgangs-Sequenz aufweist, wird ausgewählt. Das dieser ausgewählten Nulldurchgangs-Referenzsequenz entsprechende Symbol (bzw. die dieser Nulldurchgangs-Referenzsequenz zugeordnete Symbolsequenz) stellt das detektierte Symbol (die detektierte Symbolsequenz) und somit die Lösung des Detektionsproblems dar.

Die Verwendung eines Nulldurchgangs-Detektors ist unter Aufwands- und Kostengesichtspunkten ein sehr interessantes Empfängerkonzept, da es ermöglicht, auf einen (teueren) Analog-Digital-Wandler zu verzichten. Die Schwierigkeit dieses Empfängerkonzepts besteht darin, dass die Anzahl der Nulldurchgänge in einem Symbolintervall in Abhängigkeit der Daten sowie anderer Einflussgrößen (bekannte Systemparameter, unbekannt Störeinflüsse) schwankt. Aus diesem Grund ist eine direkte Zuordnung von aufeinander folgenden Nulldurchgängen der gemessenen Nulldurchgangs-Sequenz zu den äquidistanten Symbolintervallen schwierig. Der Vorteil konventioneller digitaler Empfängerkonzepte, welche eine feste oder zumindest bekannte Anzahl von Abtastwerten pro Symbolintervall zeigen, ist bei dem Empfängerkonzept mit einem Nulldurchgangs-Detektor also nicht gegeben.

Neben dem Problem der Zuordnung von im Empfänger gemessenen Nulldurchgängen zu Symbolintervallen besteht ein weiteres Problem bei der Verwendung von Nulldurchgangs-Detektoren in der Ermittlung von Nulldurchgangs-Referenzsequenzen, anhand derer ein Symbolintervall-bezogener Vergleich mit der gemessenen Sequenz von Nulldurchgängen bewerkstelligt werden kann. Erst eine möglichst effiziente Form der Berechnung solcher Nulldurchgangs-Referenzsequenzen ermöglicht eine aufwandsgünstige Realisierung dieses auf einer Detektion von Nulldurchgängen des Empfangssignals oder eines Zwischenfrequenzsignals basierenden Empfängerkonzepts.

Das Dokument US-A-5 103 463 zeigt ein Verfahren zum Empfang von frequenzmodulierten Signalen mit einem Nulldurchgangsdetektor, bei dem die empfangene Folge von Nulldurchgängen mit entsprechenden Referenzfolgen verglichen werden. Die Referenzfolgen werden als Linearkombinationen von möglichen Sequenzen des senderseitig erzeugten Signals verglichen, wobei die Linearkombinationen aus einer linearen Gleichung bestimmt werden, deren Koeffizienten die Intersymbolinterferenz des Übertragungskanals widerspiegeln.

Der Erfindung liegt die Aufgabe zugrunde, ein Verfahren sowie eine Vorrichtung zur aufwandsgünstigen Berechnung von Nulldurchgangs-Referenzsequenzen für eine Datendetektion anzugeben, die auf der Auswertung einer im Empfänger bestimmten Sequenz von Nulldurchgängen eines empfangenen Signals basiert.

Die der Erfindung zugrunde liegende Aufgabenstellung wird durch die Merkmale der unabhängigen Ansprüche gelöst. Vorteilhafte Ausgestaltungen und Weiterbildungen der Erfindung sind in den Unteransprüchen angegeben.

Demnach werden die Nulldurchgangs-Referenzsequenzen nach einer den Ausgang einer linearen Zustandsmaschine (Finite State Machine: FSM) angebenden linearen Gleichung berechnet, wobei die lineare Zustandsmaschine gemäß den Merkmalen des Anspruchs 1 zumindest näherungsweise die Signalerzeugung im Sender beschreibt.

Eine Zustandsmaschine mit Ausgang ist nach der Begriffsdefinition des NIST (National Institute of Standards and Technology, http://www.nist.gov/dads/HTML/finiteStateMachine.html) ein Berechnungsmodell bestehend aus einem Satz von Zuständen, einem Startzustand, einem Eingabe-Symbolalphabet, einer Übertragungsfunktion, die (zumindest) ein eingegebenes Symbol und (zumindest) einen aktuellen Zustand auf einen nächsten Zustand abbildet, sowie (zumindest) einen Ausgang, welcher Ausgabewerte bereitstellt, die mit Zustands-Übergängen und/oder Zuständen der Zustandsmaschine über eine Gleichung verknüpft sind. Für die Erfindung ist somit von Bedeutung, dass (1) die Nulldurchgangs-Referenzsequenzen als Ausgabewerte einer FSM beschrieben werden können, und dass (2) die Gleichung, welche den Zusammenhang zwischen den einen Zustand der FSM beschreibenden Zustandsvariablen und den Ausgabewerten der FSM (d.h. den Nulldurchgängen) beschreibt, linear ist. Durch die Kombination dieser beiden Maßnahmen wird eine einfache Berechnung der Nulldurchgangs-Referenzsequenzen ermöglicht, welche insbesondere in effizienter Weise auch in Echtzeit im Empfänger durchführbar ist.

Es wird darauf hingewiesen, dass die in Nulldurchgängen enthaltene Information in verschiedener Weise dargestellt werden kann, z.B. als eine Sequenz der Zeitpunkte der Nulldurchgänge oder als eine Sequenz der Zeitabstände zwischen aufeinanderfolgenden Nulldurchgängen, usw.. Die Begriffe Nulldurchgangs-Referenzsequenzen und Sequenzen von Nulldurchgängen sind allgemein als Sequenzen von entsprechender Nulldurchgangsinformation zu verstehen, d.h. sollen die genannten und andere Darstellungsformen von durch Messung von Nulldurchgängen gewonnenen Informationen umfassen.

Wird bei einer senderseitigen Modulation ein Modulationsgedächtnis der Länge L mit $L \geq 2$ herangezogen (man spricht in diesem Fall auch von sogenannten Partial Response Modulationsverfahren, bei welchen sich die spektrale Impulsfunktion g(t) über mehrere Symbolintervalle erstreckt), wird das Gedächtnis der Modulation durch das von der FSM definierte Rechenmodell in linearer Form berücksichtigt. Der Modulationstyp, insbesondere die gewählte spektrale Impulsfunktion g(t), beeinflusst die lineare Gleichung, die den Zusammenhang zwischen den Zustandsvariablen und den Ausgangswerten der FSM angibt.

Vorzugsweise wird das senderseitig winkelmodulierte Signal nach einem CPFSK-(Continuous Phase Frequency Shift Keying-) Verfahren mit kontinuierlicher Phase erzeugt. Ein wichtiger Vertreter von CPFSK-Modulationsverfahren ist GFSK (Gaussian Frequency Shift Keying), welches unter anderem in Bluetooth- oder DECT-Systemen eingesetzt wird. Bei GFSK ist der Zusammenhang zwischen Zustandsvariablen und Nulldurchgängen nicht linear, so dass erfindungsgemäß eine Linearisierung dieses Zusammenhangs vorgenommen werden muss, um zu der in Anspruch 1 geforderten linearen Gleichung zu gelangen.

Die in der erfindungsgemäßen Weise berechneten Nulldurchgangs-Referenzsequenzen können im Rahmen eines Demodulationsverfahrens zur Bestimmung der gesendeten Datensymbolfolge verwendet werden. Zu diesem Zweck werden die erfindungsgemäß berechneten Nulldurchgangs-Referenzsequenzen mit der detektierten Sequenz von Nulldurchgängen verglichen, und es wird anhand der Vergleichsergebnisse die gesendete Datensymbolfolge bestimmt.

Eine erste vorteilhafte Ausführungsform eines Demodulationsverfahrens kennzeichnet sich dadurch, dass für jeden Zeitschritt eine Teilsequenz endlicher Länge der detektierten Sequenz von Nulldurchgängen mit den Nulldurchgangs-Referenzsequenzen verglichen wird, und anhand der Vergleichsergebnisse ein in dem betrachteten Zeitschritt gesendetes Datensymbol oder eine gesendete Datensymbolfolge vorgegebener Länge ermittelt wird. Bei dieser Nicht-Trellis-basierten Vorgehensweise, bei welcher Datensymbol für Datensymbol unabhängig voneinander (d.h. ohne Berücksichtigung früherer Datensymbol-Entscheidungen bei der aktuellen Datensymbol-Entscheidung) detektiert wird, kann die in der Schrift DE 101 03 479.3 beschriebene City-Block-Vergleichsmetrik eingesetzt werden.

Eine zweite vorteilhafte Ausführungsform eines Demodulationsverfahrens kennzeichnet sich dadurch, dass für jeden Zeitschritt durch Prozessierung eines Trellis-Diagramms, das ein Zustands-Diagramm der linearen Zustandsmaschine darstellt, eine Ermittlung der gesendeten Symbolfolgen nach dem Viterbi-Algorithmus durchgeführt wird, wobei die Übergangsmetrikwerte zwischen einem Vorgänger-Zustand und einem Zielzustand im Trellis-Diagramm durch einen Vergleich der Zustandsabhängigen Nulldurchgangs-Referenzsequenzen mit der für den betrachteten Zeitschritt detektierten Sequenz von Nulldurchgängen berechnet werden. Der Effizienzvorteil dieser Ausführungsform ergibt sich aus der sukzessiven Pfadmetrikberechnung durch Addition der in jedem Zeitschritt neu berechneten Übergangsmetrikwerten zu den Pfadmetriken der Vorgänger-Zustände bei der bekannten Durchführung der ACS (Add-Compare-Select) Operationen des Viterbi-Algorithmus.

Die Erfindung wird nachfolgend anhand eines Ausführungsbeispiels unter Bezugnahme auf die Zeichnungen näher erläutert; in diesen zeigt:

Fig. 1 eine schematische Darstellung eines Detektors für Nulldurchgänge zur Erläuterung der Wirkungsweise desselben;

Fig. 2 ein Modell des Übertragungssystems bestehend aus Sender, Kanal und Empfänger;

Fig. 3 eine Modelldarstellung für die Signalerzeugung der störungsfreien Sequenz von Nulldurchgängen $\{t_i\}$ bei einer angenommenen Modulations-Gedächtnislänge von $L = 2$, und eine Darstellung des Einflusses von Kanalstörungen auf diese Sequenz von Nulldurchgängen;

Fig. 4 ein Schaubild, in welchem die spektrale Impulsfunktion g(t), die Phasenfunktion q(t) und deren lineare Approximation $q_{approx}(t)$ über der Zeit in Einheiten der Symbolintervalle dargestellt sind; und

Fig. 5 eine schematische Schaltungsdarstellung eines dem Detektor für Nulldurchgänge nachgeschalteten Demodulators.

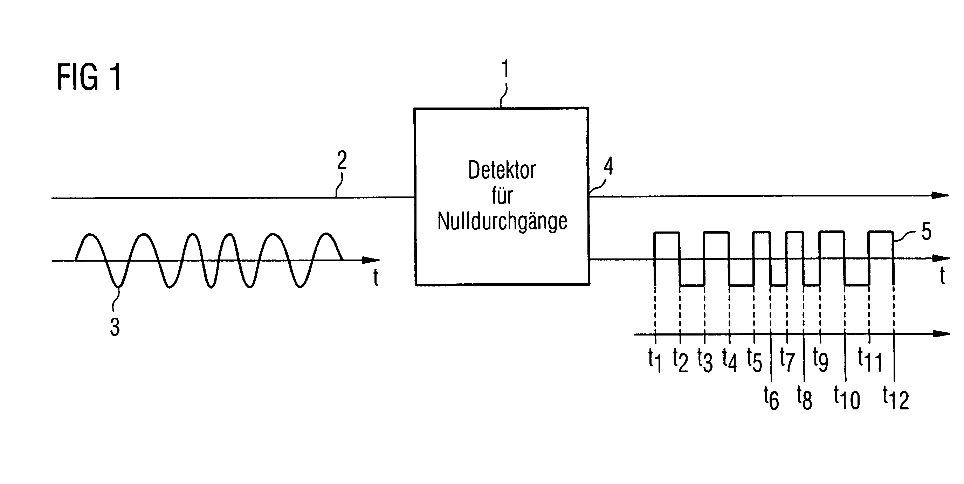

Fig. 1 zeigt einen Detektor 1 für Nulldurchgänge, dem an einem Eingang 2 ein analoges, winkelmoduliertes Signal 3, dargestellt über der Zeit t, zugeführt wird. Das analoge winkelmodulierte Signal 3 kann beispielsweise in einem Zwischenfrequenzbereich liegen. Die Zwischenfrequenz sollte höher als die Symbolfrequenz sein, damit in jeder Symbolzeitdauer mehrere Nulldurchgänge der Zwischenfrequenz auftreten.

Bei dem Detektor 1 für Nulldurchgänge handelt es sich um einen Limiter-Diskriminator, der an seinem Ausgang 4 ein zweiwertiges Signal 5 ausgibt, dessen Nulldurchgänge die Zeitpunkte $t_1, t_2, ..., t_{12}, ...$ des analogen Eingangssignals 3 anzeigen. Die Demodulation erfolgt auf der Basis dieser Nulldurchgangs-Zeitpunkte $t_1, t_2, ...$

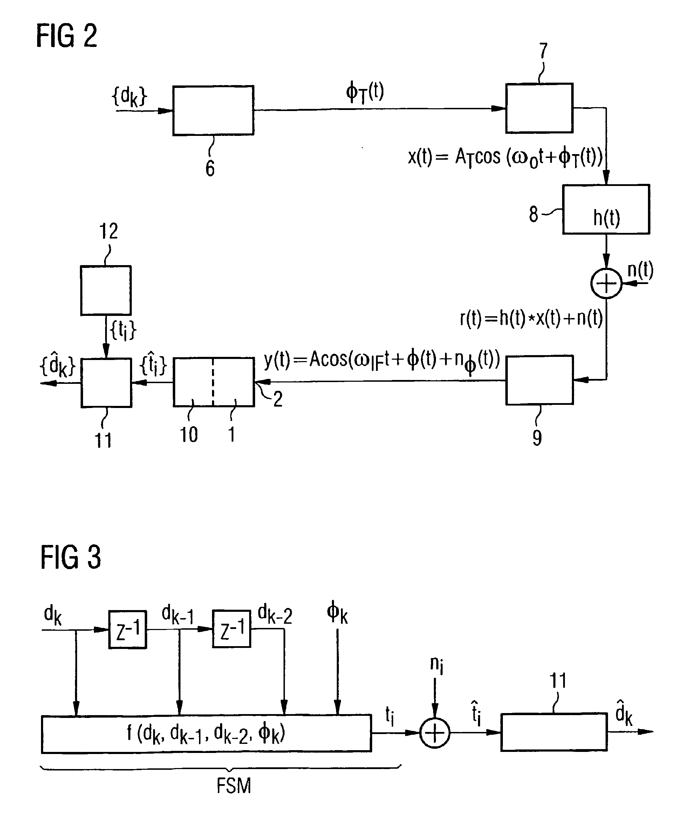

Fig. 2 zeigt ein Modell eines winkelmodulierenden Übertragungssystems. Die zu übertragende Datensymbolfolge $\{d_k\}$ wird senderseitig einem Modulator 6 zugeleitet. In dem Modulator 6 wird eine geeignete Modulation, beispielsweise CPFSK-Modulation, durchgeführt. Die vom Modulator 6 bereitgestellte Phasenfunktion $\phi_T(t)$ wird einem Hochfrequenzteil 7 des Senders zugeleitet. Das Hochfrequenzteil 7 strahlt über eine Antenne (nicht dargestellt) ein reellwertiges Hochfrequenzsignal x(t) ab, wobei in Fig. 2 mit $A_T$ die Signalamplitude und mit $\omega_0$ die Trägerfrequenz bezeichnet werden.

Das Hochfrequenzsignal x(t) wird über einen Mehrwegekanal 8 übertragen, welcher spektral und zeitlich als dispersionsfrei angenommen wird. Insbesondere wird angenommen, dass keine Intersymbol-Interferenz (ISI) auftritt. Das Übertragungsverhalten des Mehrwegekanals 8 wird durch die Impulsantwort h(t) angegeben. Zudem wird das übertragene Hochfrequenzsignal durch additives Kanalrauschen, dargestellt durch die Funktion n(t), überlagert.

Das von einem empfängerseitigen Hochfrequenzteil 9 über eine Antenne (nicht dargestellt) empfangene Empfangssignal r(t) ergibt sich durch eine Faltung der Impulsantwort h(t) mit dem abgestrahlten Signal x(t) zuzüglich dem Rauschbeitrag n(t). In dem Hochfrequenzteil 9 des Empfängers wird dieses Signal in ein Zwischenfrequenzsignal y(t) heruntergemischt. Dabei bezeichnen in Fig. 2 A die Amplitude des Zwischenfrequenzsignals, $\omega_{IF}$ die Winkelfrequenz des Zwischenfrequenzsignals, $\phi(t)$ die Phasenfunktion und $n_\phi(t)$ einen Phasenrauschbeitrag dieses Signals. Bei y(t) handelt es sich um die empfangsseitige Rekonstruktion des winkelmodulierten Signals 3 für den Detektor 1 für Nulldurchgänge.

Dem Detektor 1 für Nulldurchgänge ist ein Zähler 10 nachgeschaltet, welcher die Nulldurchgänge des Limiter-Signals 5 auswertet und in Form einer Folge von Zählwerten $\{\hat{t}_i\}$ eine Folge von Nulldurchgangs-Zeitpunkten ausgibt. Im idealen Fall (keine Kanalstörung, keine Signalverzerrung im HF-Empfangssignalpfad) würde die empfangene Sequenz von Nulldurchgängen $\{\hat{t}_i\}$ der in Fig. 1 dargestellten, zu erwartenden Folge $\{t_i\}$ entsprechen.

Die Sequenz der gemessenen Nulldurchgänge $\{\hat{t}_i\}$ wird einem Symbol- oder Symbolsequenz-Detektor 11 zugeführt. Ferner stellt eine Einheit 12 zur Erzeugung von Nulldurchgangs-Referenzsequenzen dem Symbol- bzw. Symbolsequenz-Detektor 11, der im Folgenden als Demodulator bezeichnet wird, eine Vielzahl von Nulldurchgangs-Refernzsequenzen $\{t_i\}$ bereit.

Die Elemente $t_i$ der im störungsfreien Fall empfangenen Nulldurchgangs-Referenzsequenzen $\{t_i\}$ lassen sich als eine Abbildung von Zustandsvariablen und somit als Ausgang einer FSM beschreiben. Weist das verwendete Modulationsverfahren ein Gedächtnis der Länge L auf (d.h. neben dem aktuellen Datensymbol (Bit) $d_k$ beeinflussen die letzten L Datensymbole $d_{k-1}, d_{k-2}, ... , d_{k-L}$ den Funktionsverlauf des modulierten Signals im aktuellen Symbolintervall $[kT_b, (k+1)T_b])$, so sind die Nulldurchgänge $t_i$ in dem Intervall $[kT_b, (k+1)T_b]$ als eine Funktion f der Zustandsvariablen $d_k, d_{k-1}, d_{k-2}, ..., d_{k-L}$ und einer Phase $\phi_k$ darstellbar. $\phi_k$ beinhaltet dabei eine Beschreibung der gesamten Vergangenheit bis zu dem Zeitpunkt $(k-L)T_b$ und ist ebenfalls eine Zustandsvariable. Es ist daher

$$t_i = f(d_k, d_{k-1}, ..., d_{k-L}, \phi_k) \quad \text{mit } t_i \in [kT_b, (k+1)T_b]. \qquad (1)$$

Die FSM zur Signalerzeugung der Nulldurchgangs-Sequenz $\{t_i\}$ ist in Fig. 3 für eine angenommene Modulations-Gedächtnislänge von L = 2 dargestellt. $z^{-1}$ bezeichnet im z-Raum eine Verzögerung um ein Symbolintervall.

Die Einheit 12 realisiert die in Fig. 3 dargestellte FSM. D.h., in der Einheit 12 werden für die möglichen Zustände der FSM (d.h. Datensymbole $d_k, d_{k-1}, d_{k-2}, ..., d_{k-L}$ und Phase $\phi_k$) die jeweiligen Nulldurchgangs-Referenzsequenzen $\{t_i\}$ für den aktuellen Zeitschritt k berechnet.

An sich ist die der FSM zugrunde liegende Funktion zur Berechnung der Ausgangswerte $t_i$ durch das verwendete Signalerzeugungsverfahren (Modulationsverfahren) vorgegeben. Sofern die Funktion f linear ist, kann sie erfindungsgemäß zur Berechnung der Nulldurchgänge $t_i$ verwendet werden. Andernfalls wird erfindungsgemäß der durch das Signalerzeugungsverfahren vorgegebene Zusammenhang zwischen den Zustandsvariablen und den Nulldurchgängen ti linearisiert, so dass eine explizite und einfache Abbildungsvorschrift f zur Berechnung der Nulldurchgänge $t_i$ in dem Intervall $[kT_b, (k+1)T_b]$ angegeben werden kann und in der Einheit 12 realisiert wird.

Die Beschreibung der Nulldurchgangs-Sequenz $\{t_i\}$ als Ausgang einer FSM und die Linearisierung des Zusammenhangs zwischen den Zustandsvariablen ($d_k$, $d_{k-1}$, $d_{k-2}$, ..., $d_{k-L}$, $\phi_k$) und den Nulldurchgängen $t_i$ erlaubt die in Fig. 3 dargestellte Modellierung der Abhängigkeit zwischen $t_i$ und $d_k$. Somit kann dieses Signalerzeugungsmodell zur Beschreibung des in Fig. 2 dargestellten Übertragungssystems verwendet werden. Der digitale Rauschbeitrag $n_i$ repräsentiert die durch den analogen Rauschbeitrag n(t) bewirkte Störung der Nulldurchgangs-Zeitpunkte.

Das in Fig. 2 dargestellte Übertragungsmodell wird nachfolgend am Beispiel einer GFSK-Modulation näher erläutert. Dabei wird (da anhand dieses Beispiels die Nulldurchgangs-Referenzsequenzen berechnet werden sollen) der idealisierte, störungsfreie Fall zugrunde gelegt.

Für das dem Limiter-Diskriminator 1 zugeführte störungsfreie Zwischenfrequenzsignal y(t) gilt

$$y(t) = A\cos(\omega_{IF}t + \phi(t)) \ . \tag{2}$$

Die Phase

$$\phi(t) = \int_{-\infty}^{t} \omega(\tau)d\tau \tag{3}$$

ergibt sich als Integral über die Augenblicksfrequenz

$$\omega(t) = \Delta\omega \sum_{k=-\infty}^{\infty} d_k g\left(t - kT_b\right) \tag{4}$$

Für die Datensymbole gilt $d_k \in \{-1, 1\}$, $T_b$ bezeichnet die Bitdauer (hier gleich der Symboldauer) und $\Delta\omega$ den Frequenzhub. Die Impulsfunktion g(t) ist bei GFSK definiert durch

$$g(t) = \frac{1}{2}\left\{ \mathrm{erf}\left(\alpha \frac{t}{T_b}\right) - \mathrm{erf}\left(\alpha \frac{t - T_b}{T_b}\right)\right\} \tag{5}$$

mit $\alpha = 2/\sqrt{2\ln 2}$ . Die Funktion erf($\cdot$) steht für die Gaußsche Fehlerfunktion. Hieraus ergibt sich die Phase zu

$$\phi(t) = \pi\eta \sum_{k=-\infty}^{\infty} d_k q\left(t - kT_b\right) \tag{6}$$

mit dem Modulationsindex.

$$\eta = \frac{\Delta\omega T_b}{\pi} \ . \tag{7}$$

Für den Phasenfunktion q(t) gilt dann

$$q(t) = \frac{1}{T_b} \int_{-\infty}^{t} g(\tau)\, d\tau \quad . \tag{8}$$

Die Phasenfunktion q(t) kann in sehr guter Näherung in der Form

$$q(t) = \begin{cases} 0, & t \leq 0 \\ q(t) & 0 < t < (L+1)T_b \\ 1, & t \geq (L+1)T_b \end{cases} , \tag{9}$$

angegeben werden. Dabei wird mit L das Modulations-Gedächtnis bezeichnet.

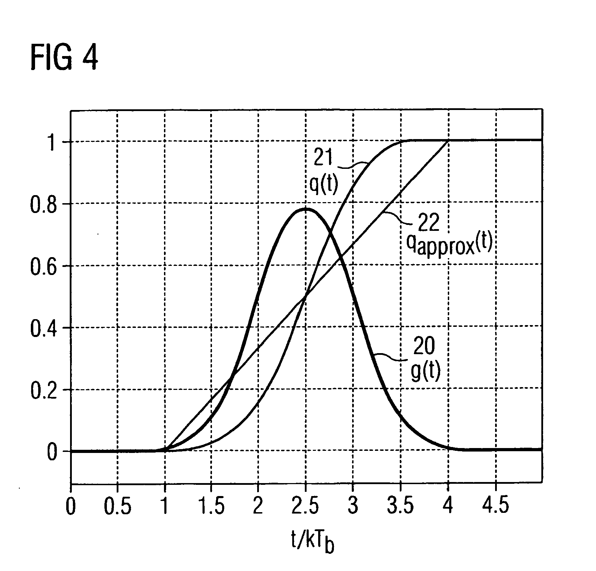

In Fig. 4 ist die spektrale Impulsfunktion g(t) durch die Kurve 20 und die Phasenfunktion q(t) durch die Kurve 21 dargestellt. Es wird deutlich, dass bei L = 4 das Konstantsetzen der Randbereiche der Phasenfunktion q(t) gemäß Gleichung (9) nur einen sehr geringen Näherungsfehler verursacht.

Berücksichtigt man Gleichung (9), so kann für den Phasenverlauf im Intervall $[kT_b, (k+1)T_b]$ geschrieben werden:

$$\phi(t) = \pi\eta \sum_{l=-\infty}^{k} d_l q\left(t - lT_b\right), \, t \in \left[kT_b, (k+1)T_b\right]$$

$$= \pi\eta \underbrace{\sum_{l=-\infty}^{k-L-1} d_l q\left(t - lT_b\right)}_{\phi_k} + \pi\eta \sum_{l=k-L}^{k} d_l q\left(t - lT_b\right)$$

$$= \phi_k + \pi\eta \sum_{l=k-L}^{k} d_l q\left(t - lT_b\right) \quad . \tag{10}$$

Demnach hängt der Phasenverlauf in dem Intervall $[kT_b, (k+1)T_b]$ von dem Phasenwinkel $\phi_k$ zum Zeitpunkt t = (k-L-1) $T_b$ und den Daten $d_{k-L}$, $d_{k-L+1}$, ..., $d_k$ ab.

Die Bedingung für die Nulldurchgänge $\{t_i\}$ lautet $y(t_i) = 0$. Für einen Nulldurchgang bei $t_i$ im Intervall $[kT_b, (k+1)T_b]$ gilt daher

$$m\pi = \omega_{IF} t_i + \phi(t_i)$$

$$= \omega_{IF} t_i + \phi_k + \pi\eta \sum_{l=k-L}^{k} d_l q\left(t_i - lT_b\right), \qquad \text{mit } m = 1, \ldots, M \tag{11}$$

Dabei ist m von 1 bis M solange hoch zu zählen, wie die korrespondierenden Nulldurchgänge $t_i$ noch in dem Intervall $[kT_b, (k+1)T_b]$ liegen.

Die Gleichung (11) definiert die Nulldurchgänge $t_i$ für GFSK modulierte Signale über einen nichtlinearen Zusammenhang. Dies führt dazu, dass Gleichung (11) eine transzendente Gleichung ist, die im Allgemeinen nur schwierig - etwa durch iterative Verfahren - gelöst werden kann. Eine Berechnung der Nulldurchgangs-Referenzsequenzen auf der Basis dieser Gleichung ist in einem kommerziell einsetzbaren Empfänger praktisch nicht möglich.

Erfindungsgemäß wird die Phasenfunktion q(t) durch eine stückweise lineare Funktion

$$q_{approx}(t) = \begin{cases} 0, & x \le 1 \\ \dfrac{1}{3}\, x - \dfrac{1}{3}, & 1 < x \le 4 \\ 1, & x > 4 \end{cases} \qquad (12)$$

approximiert. Die Funktion $q_{approx}(t)$ ist in Fig. 4 durch die Kurve 22 dargestellt.

Wird in Gleichung (11) für q(t) die für GFSK modulierte Signale geltende stückweise lineare Funktion $q_{approx}(t)$ gemäß Gleichung (12) eingesetzt, ergibt sich

$$m\pi = \omega_{IF} t_i + \phi(t_i)$$
$$= \omega_{IF} t_i + \phi_k + \pi\eta \sum_{l=k-L}^{k} d_l\, q\!\left(t_i - l T_b\right)$$

$$= \omega_{IF} t_i + \phi_k + \frac{1}{3}\,\pi\eta\left(d_{k-1}\left(t_i - (k-1)T_b\right) + d_{k-2}\left(t_i - (k-2)T_b\right) + d_{k-3}\left(t_i - (k-3)T_b\right) - 1\right)$$

$$(13)$$

Formt man diesen Zusammenhang um, so ist

$$t_i = \frac{\frac{1}{3}\,\pi\eta\left(1 + T_b\left(d_{k-1}(k-1) + d_{k-2}(k-2) + d_{k-3}(k-3)\right)\right) + m\pi - \phi_k}{\omega_{IF} + \frac{1}{3}\,\pi\eta\left(d_{k-1} + d_{k-2} + d_{k-3}\right)} \qquad (14)$$

die Lösung für Gleichung (11) unter Verwendung von $q_{approx}(t)$. Somit lassen sich also die Nullstellen $t_i$ approximativ berechnen und die Nulldurchgangs-Referenzsequenzen $\{t_i\}$ über eine Online durchführbare einfach Rechnung (siehe Gleichung (14)) angeben.

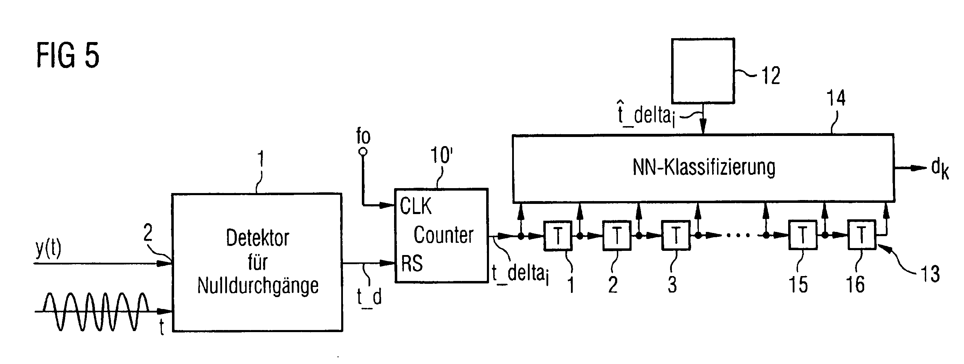

Es wird darauf hingewiesen, dass der Demodulator 11 auf unterschiedliche Art und Weise realisiert sein kann. Eine einfache Realisierung ist in der Schrift DE 102 14 581.4 angegeben und in Fig. 5 dargestellt. Dem Detektor 1 für Nulldurchgänge ist ein Zähler 10' nachgeschaltet, der eine Sequenz von zeitlichen Abstände zwischen aufeinander folgenden Nulldurchgangszeitpunkten t_delta$_i$ ausgibt. Der Zähler 10' zählt Taktimpulse, die ihm mit einer konstanten Frequenz $f_0$ zugeführt werden, und wird bei jedem Nulldurchgang zurückgesetzt. Bevor der Zähler 10' zurückgesetzt wird, wird der erreichte Zählerstand t_delta$_i$ ausgegeben und in einer dem Zähler 10' nachgeschalteten Schieberegisterkette 13 abgespeichert.

Da bei Verwendung von bandbegrenzter Frequenzmodulation wie GMSK der Einfluss eines Bits (Symbol) über mehrere Bitintervalle (Symbolintervalle) verteilt ist, ist es sinnvoll, alle Nulldurchgänge in diesem größeren zeitlichen Intervall zur Erkennung des zugehörigen Bits zu nutzen. Bei GMSK beeinflusst ein Bit die Sendefrequenz über ein zeitliches Intervall von 5 Bitperioden. Bei einer Zwischenfrequenz von 1 MHz beträgt die Anzahl der Nulldurchgänge in diesem zeitlichen Intervall ca. 16. Es ist daher sinnvoll, 16 Werte für die Erkennung eines Bits heranzuziehen, wie dies in der Fig. 5 dargestellt ist. Diese 16 Nulldurchgänge werden also nicht nur von dem zu detektierenden Bit bestimmt, sondern auch von den beiden vorhergehenden und den beiden nachfolgenden Bits. Es ist daher sinnvoll, aus den aufeinander folgenden Nulldurchgängen nicht nur 1 Bit sondern eine Bitfolge zu bestimmen. In diesem konkreten Fall lassen sich aus den 16 Nulldurchgängen 5 aufeinander folgende Bits bestimmen.

Die Erkennung erfolgt mit Hilfe einer Klassifizierungseinrichtung 14, die die Distanz der jeweils ermittelten und in der Schieberegisterkette 3 abgespeicherten Nulldurchgangs-Sequenz mit den von der Einheit 12 zur Berechnung von Nulldurchgangssequenzen berechneten Nulldurchgangs-Referenzsequenzen bestimmt. Die Nulldurchgangs-Referenzsequenzen ergeben sich in der beschriebenen Weise aus den Nulldurchgänge für alle möglichen Bitfolgen. Werden 5 aufeinander folgende Bits betrachtet, so ergeben sich $2^5 = 32$ mögliche Bitkombinationen als Zustandsvariablen für die FSM und somit entsprechende Nulldurchgangs-Referenzsequenzen, die mit der in der Schieberegisterkette 13 abgelegten Nulldurchgangssequenz zu vergleichen sind. Die Folge von Zustandsvariablen, die einer Nulldurchgangs-Referenzsequenz mit der geringsten Distanz zur detektierten Nulldurchgangssequenz $t\_delta_i$ zugeordnet ist, wird als gesendete Signalfolge $d_k$ detektiert. Wird dieser Vergleich jeweils im Abstand einer Bitperiode durchgeführt, so liegen insgesamt 5 Ergebnisse für jedes Bit vor. Die Klassifizierungseinrichtung 14 kann dann z.B. aufgrund einer Mehrheitsentscheidung das detektierte Bit im Zeitschritt k bestimmen.

Eine gängige Methode, um den Abstand zwischen den in der Schieberegisterkette 13 abgespeicherten Nulldurchgangs-Abständen $t\_delta_i$ und den Nulldurchgangs-Abständen $\hat{t}\_delta_i$ der Referenzsequenzen zu berechnen, besteht in der Berechnung der euklidschen Abstandsnorm gemäß der folgenden Beziehung

$$d\left(\{t\_delta_i\}, \{\hat{t}\_delat_i\}\right) = \sqrt[g]{\sum_{i=1}^{M} \left| t\_delta_i - \hat{t}\_delta_i \right|^g} \qquad (15)$$

mit g = 2 und M = 16. Eine Vereinfachung der Abstandsberechnung zwischen der gemessenen Nulldurchgangs-Sequenz und den Nulldurchgangs-Referenzsequenzen ergibt sich aus obiger Beziehung für g = 1 und wird als "City-Block-Metrik" bezeichnet.

Ferner kann der Demodulator 11 eine Demodulation nach dem Viterbi-Algorithmus durchführen. Die Zustandsvariablen der FSM definieren in diesem Fall die Zustände eines Trellis-Diagramms. Wie in der Technik z.B. im Bereich der Kanaldekodierung oder der Kanalentzerrung bekannt, wird bei der Viterbi-Prozessierung der kürzeste Weg durch das Trellis-Diagramm ermittelt. Zu diesem Zweck wird für jeden möglichen Übergang von einem Vorgänger-Zustand (Zeitschritt k) in einen Zielzustand (Zeitschritt k+1) des Trellis-Diagramms eine Übergangsmetrik (auch als Zweigmetrik bezeichnet) berechnet. Die Übergangsmetrik wird der Zustandsmetrik des zugehörigen Vorgänger-Zustands hinzuaddiert (ADD). Zustandsmetriken sind also akkumulierte Übergangsmetrikwerte. Die sich bei den verschiedenen Übergängen in einen bestimmten Zielzustand ergebenden möglichen Zustandsmetrikwerte dieses Zielzustands werden verglichen (COMPARE-Operation), und derjenige Pfad mit dem kleinsten Zustandsmetrikwert für den betrachteten Zielzustand wird ausgewählt (SELECT-Operation). Die übrigen Pfade werden verworfen. Wie allgemein bekannt, ermöglichen die ADD-COMPARE-SELECT-(ACS-)Operationen eine leistungsfähige und aufwandsgünstige Ermittlung der gesendeten Symbolfolge. Zur Berechnung der Übergangsmetrikwerte wird bei dem Viterbi-Algorithmus üblicherweise die euklidsche Metrik eingesetzt.

**Patentansprüche**

1. Verfahren zur Berechnung von Nulldurchgangs-Referenzsequenzen ($\{t_i\}$) als Referenzinformation für die Datendetektion einer in einem Empfänger bestimmten Sequenz von Nulldurchgängen ($\{\hat{t}_i\}$) eines empfangenen Signals (2), wobei dem empfangenen Signal (2) eine zum Empfänger zu übertragende, senderseitig winkelmodulierte Datensymbolfolge ($\{d_k\}$) zugrunde liegt und der durch das senderseitige Signalerzeugungsverfahren vorgegebene Zusammenhang zwischen der Datensymbolfolge und den Nulldurchgängen des senderseitig erzeugten Signals nichtlinear ist, mit dem Schritt:

    - Berechnen der Nulldurchgangs-Referenzsequenzen ($\{t_i\}$) nach einer den Ausgang einer linearen Zustandsmaschine (FSM, 12) angebenden linearen Gleichung, die sich aus einer Linearisierung des nichtlinearen Zusammenhangs zwischen der Datensymbolfolge und den Nulldurchgängen ergibt.

2. Verfahren nach Anspruch 1,
    **dadurch gekennzeichnet, dass** bei der senderseitigen Modulation ein Modulationsgedächtnis der Länge L mit L $\geq$ 2 herangezogen wird.

3. Verfahren nach Anspruch 1 oder 2,
    **dadurch gekennzeichnet, dass** das senderseitig winkelmodulierte Signal nach einem CPFSK-Modulationsverfahren, insbesondere GFSK, erzeugt wird.

4. Demodulationsverfahren, bei welchem die nach einem der vorhergehenden Ansprüche berechneten Nulldurchgangs-Referenzsequenzen ($\{t_i\}$) mit der detektierten Sequenz von Nulldurchgängen ($\{\hat{t}_i\}$) verglichen wird, und anhand der Vergleichsergebnisse die gesendete Datensymbolfolge ($\{d_k\}$) bestimmt wird.

**EP 1 678 902 B1**

5. Demodulationsverfahren nach Anspruch 4, bei welchem für jeden Zeitschritt eine Teilsequenz endlicher Länge der detektierten Sequenz von Nulldurchgängen mit den Nulldurchgangs-Referenzsequenzen verglichen wird und anhand der Vergleichsergebnisse ein in dem betrachteten Zeitschritt gesendetes Datensymbol ermittelt wird.

6. Demodulationsverfahren nach Anspruch 4, bei welchem für jeden Zeitschritt durch Prozessierung eines Trellis-Diagramms, welches ein Zustandsdiagramm der linearen Zustandsmaschine (FSM, 12) beschreibt, eine Ermittlung der gesendeten Datensymbolfolge ($\{d_k\}$) nach dem Viterbi-Algorithmus durchgeführt wird, wobei die Übergangsmetrikwerte zwischen einem Vorgänger-Zustand und einem Zielzustand im Trellis-Diagramm durch einen Vergleich der Zustands-äbhängigen Nulldurchgangs-Referenzsequenzen mit der für den betrachteten Zeitschritt detektierten Sequenz von Nulldurchgängen berechnet wird.

7. Vorrichtung zur Berechnung von Nulldurchgangs-Referenzsequenzen ($\{t_i\}$) als Referenzinformation für die Datendetektion einer im Empfänger bestimmten Sequenz von Nulldurchgängen ($\{\hat{t}_i\}$) eines empfangenen Signals (2), wobei dem empfangenen Signal (2) eine zum Empfänger (9, 1, 10, 11, 12) zu übertragende senderseitig, winkelmodulierte Datensymbolfolge ($\{d_k\}$) zugrunde liegt und der durch das senderseitige Signalerzeugungsverfahren vorgegebene Zusammenhang zwischen der Datensymbolfolge und den Nulldurchgängen des senderseitig erzeugten Signals nichtlinear ist, mit

- einem Rechenmittel (12) zur Berechnung der Nulldurchgangs-Referenzsequenzen nach einer den Ausgang einer linearen Zustandsmaschine (FSM) angebenden linearen Gleichung, die sich aus einer Linearisierung des nichtlinearen Zusammenhangs zwischen der Datensymbolfolge und den Nulldurchgängen ergibt.

**Claims**

1. Method for calculating zero-crossing reference sequences ($\{t_i\}$) as reference information for the data detection of a sequence of zero crossings ($\{\hat{t}_i\}$), determined in a receiver, of a received signal (2) the received signal (2) being based on a data symbol sequence ($\{d_k\}$) which is angle-modulated at the transmitter and is to be transmitted to the receiver and the relationship, as predefined by the signal generation method at the transmitter, between the data symbol sequence and the zero crossings of the signal generated at the transmitter being non-linear, said method comprising the following step:

- calculating the zero-crossing reference sequences ($\{t_i\}$) according to a linear equation specifying the output of a finite state machine (FSM, 12), which equation results from a linearization of the non-linear relationship between the data symbol sequence and the zero crossings.

2. Method according to Claim 1,
**characterized in that**
a modulation memory of length L, with $L \geq 2$, is used in the case of modulation at the transmitter.

3. Method according to Claim 1 or 2,
**characterized in that**
the signal, angle-modulated at the transmitter, is generated in accordance with a CPFSK modulation method, particularly GFSK.

4. Demodulation method in which the zero-crossing reference sequences ($\{t_i\}$) calculated in accordance with one of the preceding claims are compared with the detected sequence of zero crossings ($\{\hat{t}_i\}$) and the transmitted data symbol sequence ($\{d_k\}$) is determined by means of the results of the comparison.

5. Demodulation method according to Claim 4, in which a part-sequence of finite length of the detected sequence of zero crossings is compared with the zero-crossing reference sequences for each time increment and a data symbol transmitted in the time increment considered is determined by means of the results of the comparison.

6. Demodulation method according to Claim 4, in which a determination of the transmitted data symbol sequence ($\{d_k\}$) is performed in accordance with the Viterbi algorithm by processing a trellis diagram, which describes a state diagram of the finite state machine (FSM, 12), for each time increment, wherein the transition metric values between a precursor state and a target state in the trellis diagram are calculated by comparing the state-dependent zero-crossing reference sequences with the sequence of zero crossings detected for the time increment considered.

7. Device for calculating zero-crossing reference sequences ($\{t_i\}$) as reference information for the data detection of a sequence of zero crossings ($\{\hat{t}_i\}$), determined in the receiver, of a received signal (2) the received signal (2) being based on a data symbol sequence ($\{d_k\}$) which is angle-modulated at the transmitter and is to be transmitted to the receiver (9, 1, 10, 11, 12), and the relationship, as predefined by the signal generation method at the transmitter, between the data symbol sequence and the zero crossings of the signal generated at the transmitter being non-linear, comprising

- a computing means (12) for calculating the zero-crossing reference sequences according to a linear equation specifying the output of a finite state machine (FSM), which equation results from a linearization of the non-linear relationship between the data symbol sequence and the zero crossings.

**Revendications**

1. Procédé de calcul de séquences ($\{t_i\}$) de référence de passages par zéro comme information de référence pour la détection de données d'une séquence, déterminée dans un récepteur, de passages ($\{\hat{t}_i\}$) par zéro d'un signal (2) reçu, dans lequel une suite ($\{d_k\}$) de symboles de données modulée angulairement du côté de l'émetteur et à transmettre au récepteur est à la base du signal (2) reçu et la relation prescrite par le procédé de production du signal du côté de l'émetteur entre la suite de symboles de données et des passages par zéro du signal produit du côté de l'émetteur n'est pas linéaire, comprenant le stade :

- calcul des séquences ($\{t_i\}$) de référence de passages par zéro suivant une équation linéaire indiquant la sortie d'un automate (FSM, 12) fini linéaire, qui provient d'une linéarisation de la relation non linéaire entre la suite de symboles de données et les passages par zéro.

2. Procédé suivant la revendication 1,
**caractérisé en ce que**, dans la modulation du côté de l'émetteur, on tire parti d'une mémoire de modulation de longueur L avec L $\geq$ 2.

3. Procédé suivant la revendication 1 ou 2,
**caractérisé en ce qu'**on produit le signal modulé angulairement du côté de l'émetteur par un procédé de modulation CPFSK, notamment GFSK.

4. Procédé de démodulation dans lequel on compare les séquences ($\{t_i\}$) de passages par zéro calculées suivant l'une des revendications précédentes à la séquence détectée de passages ($\{\hat{t}_1\}$) par zéro et on détermine la suite ($\{\hat{d}_r\}$) de symboles de données émise au moyen des résultats de la comparaison.

5. Procédé de démodulation suivant la revendication 4, dans lequel pour chaque stade temporel on compare une séquence partielle de longueur finie de la séquence détectée de passages par zéro aux séquences de référence de passages par zéro et on détermine un symbole de données émis dans le stade temporel considéré au moyen des résultats de la comparaison.

6. Procédé de démodulation suivant la revendication 4, dans lequel pour chaque stade temporel on effectue par traitement d'un diagramme en treillis, qui décrit un diagramme d'état de l'automate (FSM, 12) fini linéaire, une détermination de la suite ($\{d_k\}$) de symboles de données émise suivant l'algorithme de Viterbi, les valeurs de métrique de transition entre un état précédent et un état cible dans le diagramme en treillis étant calculées par une comparaison des séquences de référence de passages par zéro qui dépendent de l'état à la séquence de passages par zéro qui a été détectée pour le stade temporel considéré.

7. Dispositif de calcul de séquences ($\{t_i\}$) de référence de passages par zéro comme information de référence pour la détection de données d'une séquence, déterminée dans le récepteur, de passages ($\{\hat{t}_i\}$) par zéro d'un signal (2) reçu, une suite ($\{d_k\}$) de symboles de données modulée angulairement, du côté de l'émetteur à transmettre au récepteur (9, 1, 10, 11, 12) étant à la base du signal (2) reçu et la relation prescrite par le procédé de production du signal du côté de l'émetteur entre la suite de symboles de données et les passages par zéro du signal produit du côté de l'émetteur n'étant pas linéaire, comprenant

- un moyen (12) informatique pour le calcul des séquences de référence de passages par zéro suivant une équation linéaire indiquant la sortie d'un automate (FSM) fini linéaire, qui provient d'une linéarisation de la relation non linéaire entre la suite de symboles de données et les passages par zéro.

FIG 1

EP 1 678 902 B1

## FIG 2

$$\{d_k\} \rightarrow \boxed{6} \xrightarrow{\phi_T(t)} \boxed{7}$$

$$x(t) = A_T \cos(\omega_0 t + \phi_T(t))$$

$$8 \quad \boxed{h(t)}$$

$$\oplus \xleftarrow{n(t)}$$

$$r(t) = h(t) * x(t) + n(t)$$

$$\{t_i\} \rightarrow \boxed{12}$$

$$\{\hat{d}_k\} \leftarrow \boxed{11} \xleftarrow{\{\hat{t}_i\}} \boxed{10 \quad 1} \xleftarrow{2} \; y(t) = A\cos(\omega_{IF} t + \phi(t) + n_\phi(t)) \; \boxed{9}$$

## FIG 3

$$d_k \rightarrow \boxed{Z^{-1}} \xrightarrow{d_{k-1}} \boxed{Z^{-1}} \xrightarrow{d_{k-2}} \qquad \phi_k$$

$$n_i$$

$$\boxed{f(d_k, d_{k-1}, d_{k-2}, \phi_k)} \xrightarrow{t_i} \oplus \xrightarrow{\hat{t}_i} \boxed{11} \xrightarrow{\hat{d}_k}$$

$$\underbrace{\qquad\qquad\qquad\qquad}_{FSM}$$

## FIG 4

EP 1 678 902 B1

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 01214581
- US 5103463 A
- DE 10103479
- DE 10214581